# FASCICULE DE BREVET EUROPEEN

(11) **EP 0 783 362 B1**
(45) Date de publication et mention de la délivrance du brevet: **19.09.2001**
(21) Numéro de dépôt: 94922304.4
(22) Date de dépôt: 26.07.1994
(51) Int. Cl.: B01D 53/02, B01J 20/18

(54) **AGENTS ZEOLITIQUES DE DESULFURATION ET LEUR APPLICATION AU TRAITEMENT DES GAZ CONTENANT DU CO 2**
ZEOLITISCHE ENTSCHWEFELUNGSMITTEL UND IHRE VERWENDUNG ZUR BEHANDLUNG VON C02 ENTHALTENDEN GASEN
ZEOLITIC DESULFURAZATION AGENTS AND THEIR APPLICATION TO CO 2 - CONTAINING GAS TREATMENT

(43) Date de publication de la demande: 16.07.1997
(73) Titulaire: CECA S.A., F-92091 Paris la Défense Cédex 42 (FR); VNIIGAZ(INSTITUT DE RECHERCHE SCIENTIFIQUE DU GAZ NATUREL ET DES TECHNOLOGIES DE GAZ DE TOUTE LA REGION DE RUSSIE), Razvilka,Moskovskaya obl.,142717 (RU)
(72) Inventeur: TSYBULEVSKI, Albert M., Moscow, 113208 (RU); MOURINE, Vladimir I., Moscow, 117296 (RU); PLEE, Dominique, F-64000 Pau (FR); MAYOLET, Francis, F-78120 Rambouillet (FR)
(74) Mandataire: Haicour, Philippe
(86) Numéro de dépôt international: FR9400932
(87) Numéro de publication internationale: WO9603199

(56) Documents cités:
- EP-A- 0 511 885
- DD-A- 294 874
- FR-A- 2 618 085
- FR-A- 2 678 525

## Description

L'invention a trait aux procédés de désulfuration de gaz d'hydrocarbures et aux adsorbants zéolitiques utilisables dans ces procédés. Elle peut être appliquée dans l'industrie du pétrole, du gaz, de la pétrochimie et dans le raffinage du pétrole.

On utilise largement les adsorbants de la catégorie des tamis moléculaires de type A et X pour purifier des gaz contenant des composés sulfurés. Ils ont l'avantage, décrit par exemple dans le brevet soviétique SU 753449, d'avoir une bonne capacité dynamique de soufre et de conduire à des taux élevés de purification. Cependant, lorsqu'on les utilise avec des gaz bruts, gaz naturels ou gaz associés, de composition :

| | |
|---|---|
| C₁ | 20 à 100% en volume |
| C₂ | 0 à 20% |
| C₃ | 0 à 25% |
| C₄₊ | 0 à 5% |
| H₂S | 0,0001 à 0,15% |
| CO₂ | 1 à 50% (de préférence 1 à 15%) le reste étant constitué par exemple de N₂, H₂, He. |

ils catalysent la réaction :

CO₂ + H₂S ⇄ COS + H₂O

et une grande partie du H₂S se transforme en oxysulfure de carbone qui n'est pas retenu sur l'adsorbant et se retrouve dans les gaz épurés.

Plus précisément, avec les gaz qui contiennent plus de 1 % en volume de CO₂, par exemple 2 % et 0,1 % d'H₂S, un tamis 5A échangé à 65-70 % et granulé à l'aide d'un liant kaolinite génère quelques 140 à 220 mg/m³ de COS (voir le brevet français n° 2.618.085). Pour donner à ce phénomène une dimension pratique, la norme admise sur le territoire de la Russie est de 35 à 40 mg/m³.

La présente invention a pour but de remédier à de tels inconvénients et de fournir des adsorbants pour la désulfuration des gaz à haute capacité, à la fois efficaces pour éliminer le H₂S des gaz et à activité catalytique de formation de COS très limitée, et de façon plus précise, des adsorbants doués d'une haute capacité d'adsorption dynamique de l'ordre de 2 % en poids, mais avec lesquels le niveau de formation de COS reste limité à 35 mg/m³ maximum.

Selon l'invention, on parvient à ce résultat grâce à l'utilisation d'un adsorbant tel que defini dans les revendications 1 à 4.

La porosité secondaire de l'adsorbant est une caractéristique importante des adsorbants selon l'invention. Jusqu'à présent, on n'avait vraiment pris en compte que la diffusion dans les microcristaux de zéolite. Les inventeurs ont mis en évidence tout l'intérêt qu'il y avait à considérer la perméabilité comme une grandeur additive, définie par la relation 1/D_{gr} = 1/D_{z} + 1/D_{por.sec}, ou D_{gr}, D_{z}, et D_{por.sec} sont respectivement les coefficients de diffusion dans le granulé, dans les microcristaux et dans les pores secondaires ; ils ont vérifié qu'en augmentant le volume de ces pores secondaires, et donc la perméabilité totale des granulés pour l'adsorbat, on diminuait le temps de contact entre l'adsorbat et l'adsorbant, tout en améliorant la capacité d'adsorption. Il s'agit d'un résultat nouveau, que confirme l'exemple 7 donné plus bas. Cette porosité secondaire de l'aggloméré est estimée d'après l'adsorption d'hexane à 20°C de 0,18 à 0,95°P/P_{S}); elle est choisie de préférence comprise entre 0,42 et 0,55 cm³/g, pour des rayons de pores compris entre 10 et 500 A° (10.10⁻¹⁰ m à 500.10⁻¹⁰ m). Elle se règle par le choix judicieux des conditions de la fabrication des agglomérés, paramètres bien connus de l'homme du métier, tel que le choix du liant, l'humidité de la pâte, la pression de vis de l'arbre du malaxeur, le régime de cuisson, utilisation d'additifs formant des gaz par décomposition thermique lors de la cuisson, par exemple la mélasse, le bleu de méthylène ou des tensioactifs, tels que le nonylphénol oxyéthyléné à 40 OE, en quantités variant de 0,5 à 2,5 % environ.

La teneur en cations Ca⁺⁺/Na⁺ des adsorbants selon l'invention a une influence directe sur leur activité catalytique. Pour diminuer la formation de COS, il est nécessaire d'abaisser la teneur en Na⁺ de la composition zéolitique vers 1,4 milliéquivalent/g (ce qui correspond à un taux d'échange Ca^{2/}Na⁺ de l'ordre de 80 %).

Les cristaux de très petite taille peuvent toutefois subir une déstructuration du fait d'un échange ionique aussi poussé et développer au cours de cette étape de nouveaux centres catalytiques pour la formation du COS. Aussi les taux d'échange élevés exigés dans la présente invention peuvent être réalisés sans compromettre la structure cristalline, à condition de ne retenir que des cristaux dont la taille soit limitée en valeur inférieure à 1 µm. Par ailleurs, la formation du COS n'est sensiblement réduite que lorsqu'on utilise de petits cristaux, probablement parce qu'alors, le temps est réduit, pendant lequel le CO₂ reste dans les microcristaux. On a limité ainsi la taille utile des microcristaux à 1-2 µm.

Les argiles contiennent inévitablement des oxydes de fer et d'aluminium qui sont actifs dans la réaction de formation de COS. Les ions Fe²⁺ et Fe³⁺ ont une forte tendance à se déplacer et à s'échanger dans le solide avec les cations alcalins et alcalino-terreux sous l'effet de la température: de ce fait, des adsorbants initialement inactifs quant à la formation de COS, se mettent à en générer après quelques cycles de régénération thermique, et ce, d'autant plus que de l'eau est formée ou présente à une température élevée. L'invention remédie à cet inconvénient en ne recourant qu'à des liants à faible teneur en fer libre (teneur inférieure à 0,5 % exprimée en Fe₂O₃). Les inventeurs ont également établi par ailleurs que la réaction de formation du COS prend place sur les sites basiques de Bronsted. La gamma-alumine possède une acidité et une basicité non négligeables (acidité exprimée en adsorption de NH₃ de 1,4 à 1,8 mmole/g, basicité exprimée en adsorption de SO₂ de 0,8 à 1 mmole/g). Ces auteurs proposent de désactiver les sites actifs de l'argile par phosphatation, opération qui se réalise de façon simple par mélange de l'argile avec une solution aqueuse d'acide ortho- ou métaphosphorique à une concentration appropriée . Les adsorbants granulés avec une argile prise dans le groupe constitué par la montmorillonite, la bentonite, l'attapulgite et le kaolin et dont la teneur en phosphate d'aluminium atteint 0,2 à 3% en poids après traitement à l'acide phosphorique sont préférés. Un exemple de la relation entre l'activité de formation du COS et la basicité de l'argile est donné dans l'exemple 6.

L'invention a également pour objet l'utilisation des adsorbants tels que décrits précédemment dans les procédés de purification de gaz naturels ou gaz associés ayant la composition donnée plus haut, lesdits procédés opérant sous des pressions comprises entre 0,1 et 10 MPa, à des températures comprises entre 0 et 50°C, et avec des vitesses linéaires de 0,01 à 0,2 m/s.

### EXEMPLES

Bien que les exemples suivants ne soient pas selon l'invention parce qu'ils ne mettent pas en oeuvre tous les moyens de l'invention, ils illustrent l'influence de différents paramètres de l'invention.

### Exemple 1 :

### Influence combinée de la taille des cristaux et du taux d'échange

Dans cet exemple, le liant est le kaolin ASP 200 d'Engelhardt, dont la teneur en Fe₂O₃ est 0,5 % et l'acidité 0,32 mmole NH₃/g. Sa passivation a été réalisée en la malaxant au mortier avec de l'acide phosphorique à 0,94 %, à raison de 9 grammes de kaolin pour 1 gramme de solution phosphorique, et en abandonnant la pâte au mûrissement pendant trois heures à 65°C en étuve. Son aptitude à générer de l'oxysulfure de carbone est mesurée par la constante de formation de l'oxysulfure de carbone K(COS) égale à 6.10⁻⁶ mole.kg⁻¹.s.⁻¹.Pa⁻¹.

On compare des cristaux industriels courants, de 1 à 10 µm, à relativement bas taux d'échange, à des cristaux selon l'invention, de 1 à 2 µm et à taux d'échange plus élevé, agglomérés avec 20 % de liant, quant à leur constante K(COS) en 10⁻⁶ mole.kg⁻¹.s⁻¹.Pa⁻¹.

| ***Cristaux*** | ***Industriels*** | ***Selon l'invention*** |
|---|---|---|
| Taux d'échange | 72% | 77% |
| K(COS) | 12,2 | 9,5 |

résultats qui mettent en évidence l'abaissement du taux de COS formé avec les adsorbants de l'invention.

### Exemple 2

Dans cet exemple, on a comparé des cristaux de taille industrielle (1-10 µm) agglomérés avec un liant passivé ou non quant à leur constante de formation de COS. Les résultats obtenus témoignent clairement en faveur de agglomération avec le liant passivé.

| ***Cristaux*** | ***Industriels*** | |
|---|---|---|
| Liant passivé | oui | non |
| Taux d'échange | 72% | 72% |
| K(COS) | 6,2 | 12,2 |

### Exemple 3

L'adsorbant est préparé dans les conditions de l'exemple 1, sans passivation, avec des cristaux industriels (1-10 µm). Le domaine de variation des taux d'échange des cations Na⁺→Ca²⁺ s'étend de 60,5 à 97%. L'activité des échantillons granulés a été estimée d'après leur constante de formation de l'oxysulfure de carbone K(COS) exprimée en 10⁻⁶ mole.kg⁻¹.s.⁻¹.Pa^{-1.}

| ***Echantillon*** | ***A-0*** | ***A-1*** | ***A-2*** | ***A-3*** | ***A-4*** | ***A-5*** |
|---|---|---|---|---|---|---|
| Taux d'échange (%) | 60,5 | 72 | 78 | 87 | 92 | 97 |
| K(COS) | 19,6 | 12,2 | 8,0 | 7,4 | 14,6 | 16,7 |

Ces résultats montrent que pour que la constante K(COS) ne dépasse pas 10, le taux d'échange dans l'adsorbant doit se situer dans l'intervalle 76-90 % ; on préfère un taux d'échange de 78-88 % dans lequel on assure une constante au plus égale à 8.

### Exemple 4

On prépare une série d'adsorbants avec un taux d'échange de 78 %, qui est celui de l'échantillon A-2 de l'exemple précédent, mais en faisant varier la taille des microcristaux en jouant, selon des pratiques connues de l'homme du métier, sur l'apparition spontanée de germes au cours du mûrissement des gels, ou sur leur ensemencement par des quantités contrôlées de germes. Par exemple, on a obtenu les cristaux de 1 à 2 µm de l'opération B-2 par mûrissement d'un gel de composition 2 Na₂O - Al₂O₃ - 2 SiO₂ - 90 H₂O pendant 20 heures à l'ambiante suivi d'une cristallisation à 100°C pendant 3 heures (on obtient du même coup une distribution granulométrique resserrée du fait que beaucoup de germes se sont formés au cours de la maturation). De même, les cristaux de l'opération B-4 ont été obtenus en partant d'un gel de même composition 2 Na₂O - Al₂O₃ - 2 SiO₂ - 90 H₂O, mais ensemencé, avant cristallisation, d'une quantité suffisante de germes (zéolite 4A finement broyée), de telle façon que la taille des cristaux finals soit comprise entre 3 et 4 µm.

Les résultats sont consignés dans le tableau ci-dessous. Comme précédemment, la constante de formation de l'oxysulfure de carbone K_{(COS)} est exprimée en (10⁻⁶ mole.kg⁻¹.s.⁻¹.Pa⁻¹).

| ***Echantillon*** | ***A-2*** | ***B-0*** | ***B-2*** | ***B-3*** | ***B-4*** | ***B-5*** |
|---|---|---|---|---|---|---|
| Tailles (µm) | 1-10 | 0-2 | 1-2 | 2-4 | 3-4 | 4-6 |
| K_{(COS)} | 8,0 | 12,2 | 3,1 | 8,6 | 8,4 | 21,9 |

Ces résultats font ressortir qu'une répartition étroite et une petite taille des microcristaux sont préférables. La taille optimale se situe entre 1 et 2 µm.

### Exemple 5

On prépare une série d'adsorbants à base de l'échantillon B-2 de l'exemple précédent, par granulation de la poudre de zéolite avec des argiles kaoliniques provenant de divers gisements de la CEI et se caractérisant par des teneurs en fer variées. La teneur en argile a été fixée à 20 % dans tous les cas. Les résultats figurent au tableau ci-après, où l'on a porté la teneur en poids % du fer présent sous forme de Fe²⁺ et Fe³⁺ dans l'argile et exprimé en Fe₂O₃ %, et la constante de formation de l'oxysulfure de carbone K_{(COS)} en 10⁻⁶ mole.kg⁻¹.s.⁻¹.Pa⁻¹.

| ***Echantillon*** | ***C-0*** | ***C-1*** | ***C-2*** | ***C-3*** |
|---|---|---|---|---|
| Fe₂O₃ % dans l'argile | 0,1 | 0,44 | 1,2 | 3,9 |
| K_{(COS)} | 2,6 | 3,2 | 10,2 | 33,0 |

### Exemple 6

Dans cet essai, la variable explorée est l'acidité-basicité selon Bronsted du liant de l'adsorbant. A cet effet, on prépare la série d'échantillons D-1 à D-3, à partir de l'échantillon C-1 emprunté à l'exemple précédent, dans lesquels le liant est additionné à raison de 5 % en poids compté sur le produit final de γ-Al₂O₃ ou η-Al₂O₃ d'acidité et de basicité variées. L'acidité est mesurée par adsorption d'ammoniac à 150°C et la basicité par adsorption de dioxyde de soufre à cette même température. Ces grandeurs sont mesurées à la balance de Mc-Bain. Pour cela, les échantillons sont tout d'abord portés à 400°C sous vide jusqu'à poids constant. L'adsorption d'ammoniac ou de dioxyde de soufre est effectuée à température ambiante et sous une pression de 5-10 mm de mercure (0,6-1,3 kPa), puis on évacue l'excès d'adsorbat. L'échantillon ainsi traité est alors porté à 150°C sous vide pendant une heure: la perte de poids enregistrée et exprimée en millimoles d'ammoniac ou de dioxyde de soufre par gramme d'adsorbat mesure l'acidité ou la basicité. Les résultats sont présentés sur le tableau ci-après.

| ***Echantillon*** | ***C-1*** | ***D-1*** | ***D-2*** | ***D-3*** |
|---|---|---|---|---|
| Acidité NH₃ (mmole/g) | 0,35 | 0,11 | 0,46 | 1,1 |
| Basicité SO₂ (mmole/g) | 0,28 | 0,08 | 0,15 | 0,78 |
| K_{(COS)} | 3,2 | 1,8 | 2,9 | 55,0 |

### Exemple 7

Cinq kilogrammes de chacun de divers échantillons ont été chargés dans une installation pilote dont l'adsorbeur avait un diamètre de 50 mm, et où la hauteur du lit d'adsorbant était d'environ 3 m. Le gaz naturel entrant comportait 2 % de CO2, 1,1 % d'éthane, 0,03 % de propane, 0,08 % de H₂S, le reste étant du méthane; le point de rosée était de -55°C à la pression normale ; le débit était de 18 m3/h, la pression de 55 bars, la température de 40°C. Pour cela, on a préparé en plus grande quantité :
- un échantillon A-2 comme celui de l'exemple 3 ;
- un échantillon B-2 comme celui de l'exemple 4;
- un échantillon C-1 comme celui de l'exemple 5;
- des échantillons E-1, E-2 et E-3 à porosité secondaire variable, à partir de cristaux échangés à 88 % et de liant passivé ainsi qu'il est expliqué dans l'exemple 1, la variation du volume des pores étant obtenue en ajoutant au liant des quantités variables de solution de mélasse ou de bleu de méthylène comme agent porogène.

A titre comparatif, un essai a été effectué avec un échantillon A qui est un produit selon l'art antérieur (brevet français n°2.277.798).

La caractéristique mesurée est la teneur du gaz de sortie en COS et en H₂S.

Les résultats sont consignés ci-après.

| ***Echantillons*** | ***A*** | ***A-2*** | ***B-2*** | ***C-1*** | ***E-1*** | ***E-2*** | ***E-3*** |
|---|---|---|---|---|---|---|---|
| Cristaux (µm) | 1-10 | 1-10 | 1-2 | 1-2 | 1-2 | 1-2 | 1-2 |
| Taux d'échange % | 72 | 78 | 78 | 78 | 88 | 88 | 88 |
| Fe₂O₃ % | 0,81 | 0,81 | 0,81 | 0,44 | 0,44 | 0,5 | 0,5 |
| Basicité (mmole/g) | 0,21 | 0,21 | 0,21 | 0,28 | 0,09 | 0,11 | 0,11 |
| Pores (cm³/g) | 0,26 | 0,26 | 0,36 | 0,41 | 0,55 | 0,49 | 0,44 |
| Capacité H₂S, % | 2,2 | 1,8 | 2,35 | 2,3 | 3,1 | 2,8 | 2,7 |
| COS sortant mg/m³ | 215 | 175 | 165 | 58 | 18 | 26 | 30 |

Ces résultats confirment la pertinence du choix des paramètres de l'adsorbant quant à la capacité d'adsorption du H₂S et la minimisation du taux de COS sortant.

## Revendications

1. Adsorbant pour la désulfuration des gaz naturels et des gaz associés contenant plus de 1 % de CO₂ à base de zéolite synthétique CaA comportant de 75 à 85 % en poids de zéolite Ca A dont la taille des monocristaux est comprise entre 1 à 2 µm, dont le taux d'échange par des ions Ca²⁺ est compris entre 76 et 90 %, préférentiellement entre 78 et 88 %, granulée avec 25 à 15 % en poids d'une argile naturelle, contenant moins de 0,5 % en poids de fer exprimé en Fe₂O₃, dont l'acidité, exprimée en ammoniac adsorbable à 150 °C, est inférieure à 0,1 mmole/g, dont la basicité, exprimée en dioxyde de soufre adsorbable à 150 °C, est inférieure à 0,15 mmole/g et dont la teneur en phosphate, exprimée en phosphate d'aluminium, est de 0 à 3,4 % en poids, et de préférence de 0,2 à 3 % en poids.

2. Adsorbant selon la revendication 1, **caractérisé en ce que** ses pores secondaires occupent entre 0,42 et 0,55 cm³ par gramme de granulé.

3. Adsorbant selon l'une quelconque des revendications 1 ou 2, **caractérisé en ce que** le rayon des pores secondaires est compris entre 10 et 500 Å (10.10⁻¹⁰ m à 500.10⁻¹⁰ m).

4. Adsorbant selon l'une quelconque des revendications 1 à 3, **caractérisé en ce que** l'argile est choisie dans le groupe constitué par la montmorillonite, la bentonite, l'attapulgite et le kaolin et est modifiée par traitement à l'acide phosphorique de façon telle que sa teneur en phosphate d'aluminium atteigne 0,2 à 3% en poids.

5. Utilisation de l'adsorbant selon l'une quelconque des revendications 1 à 4 dans les procédés de purification de gaz naturels ou de gaz associés, de composition :
| | |
|---|---|
| C₁ | 20 à 100% en volume |
| C₂ | 0 à 20 % |
| C₃ | 0 à 25 % |
| C₄+ | 0 à 5 % |
| H₂S | 0,0001 à 0,15 % |
| CO₂ | 1 à 50 % (de préférence 1 à 15 %). |

6. Utilisation selon la revendication 5 dans les procédés de purification de gaz opérant dans les conditions ci-après :
- pression 0,1 à 10 MPa
- température 0 à 50°C
- vitesse linéaire 0,01 à 0,2m/s.

7. Utilisation selon la revendication 5 **caractérisée en ce que** le reste de la composition gazeuse est constitué d'azote, d'hydrogène, d'hélium.

## Patentansprüche

1. Adsorbens zur Entschwefelung von Gasen natürlichen Ursprungs und damit in Zusammenhang stehenden Gasen mit mehr als 1 % CO₂
auf der Basis eines synthetischen Zeoliths vom Typ Ca A,
- dessen Einkristalle eine Größe von 1 bis 2 µm besitzen,
- dessen Austauschgrad, bezogen auf den Austausch durch Ca²⁺ -Ionen, 76 bis 90 % und vorzugsweise 78 bis 88 % beträgt und
- der mit 25 bis 15 Gew.-% eines Tons granuliert ist, der weniger als 0,5 Gew.-% Eisen, ausgedrückt als Fe₂O₃, enthält, dessen Acidität, ausgedrückt als bei 150 °C adsorbierbares Ammoniak, kleiner als 0,1 mmol/g ist, dessen Basizität, ausgedrückt als bei 150 °C adsorbierbares Schwefeldioxid, kleiner als 0,15 mmol/g ist und dessen Phosphatgehalt, ausgedrückt als Aluminiumphosphat, 0 bis 3,4 Gew.-% und vorzugsweise 0,2 bis 3 Gew.-% beträgt.

2. Adsorbens nach Anspruch 1, **dadurch gekennzeichnet, daß** seine sekundären Poren ein Volumen von 0,42 bis 0,55 cm³ pro Gramm Granulat einnehmen.

3. Adsorbens nach Anspruch 1 oder 2, **dadurch gekennzeichnet, daß** der Radius der sekundären Poren im Bereich von 10 bis 500 Å (10·10⁻¹⁰ bis 500·10⁻¹⁰ m) liegt.

4. Adsorbens nach einem der Ansprüche 1 bis 3, **dadurch gekennzeichnet, daß** der Ton unter Montmorillonit, Bentonit, Attapulgit und Kaolin ausgewählt und durch Behandlung mit Phosphorsäure so modifiziert ist, daß sein Gehalt an Aluminiumphosphat 0,2 bis 3 Gew.-% erreicht.

5. Verwendung des Adsorbens nach einem der Ansprüche 1 bis 4 in Verfahren zur Reinigung von Gasen natürlichen Ursprungs und damit in Zusammenhang stehenden Gasen folgender Zusammensetzung:
| | |
|---|---|
| C₁ | 20 bis 100 Vol.-% |
| C₂ | 0 bis 20 % |
| C₃ | 0 bis 25 % |
| C₄₊ | 0 bis 5 % |
| H₂S | 0,0001 bis 0,15 % |
| CO₂ | 1 bis 50 % (bevorzugt 1 bis 15 %). |

6. Verwendung nach Anspruch 5 in Verfahren zur Reinigung von Gasen unter folgenden Betriebsbedingungen:
- Druck 0,1 bis 10 MPa
- Temperatur 0 bis 50 °C
- Lineargeschwindigkeit 0,01 bis 0, 2 m/s.

7. Verwendung nach Anspruch 5, **dadurch gekennzeichnet, daß** der Rest der gasförmigen Zusammensetzung aus Stickstoff, Wasserstoff und Helium besteht.

## Claims

1. Adsorbent for the desulphurization of natural gases and of associated gases containing more than 1% of CO₂, based on a CaA synthetic zeolite comprising from 75 to 85% by weight of CaA zeolite, the size of the single crystals of which is between 1 and 2 µm and the degree of exchange with Ca²⁺ ions of which is between 76 and 90%, preferably between 78 and 88%, granulated with 25 to 15% by weight of a clay containing less than 0.5% by weight of iron, expressed as Fe₂O₃, the acidity of which, expressed as adsorbable ammonia at 150°C, is less than 0.1 mmol/g and the basicity of which, expressed as sulphur dioxide adsorbable at 150°C, is less than 0.15 mmol/g, and the phosphate content of which, expressed as aluminium phosphate, is from 0 to 3.4% by weight and preferably from 0.2 to 3% by weight.

2. Adsorbent according to Claim 1, **characterized in that** its secondary pores occupy between 0.42 and 0.55 cm³ per gram of granules.

3. Adsorbent according to either of Claims 1 and 2, **characterized in that** the radius of the secondary pores is between 10 and 500 Å (from 10 × 10⁻¹⁰ m to 500 × 10⁻¹⁰ m).

4. Adsorbent according to any one of Claims 1 to 3, **characterized in that** the clay is chosen from the group consisting of - montmorillonite, bentonite, attapulgite and kaolin and is modified by phosphoric acid treatment in such a way that its aluminium phosphate content reaches 0.2 to 3% by weight.

5. Use of the adsorbent according to any one of Claims 1 to 4 in processes for purifying natural gases or associated gases, of composition:
| | |
|---|---|
| C₁ | 20 to 100% by volume; |
| C₂ | 0 to 20%; |
| C₃ | 0 to 25%; |
| C₄₊ | 0 to 5%; |
| H₂S | 0.0001 to 0.15%; |
| CO₂ | 1 to 50% (preferably 1 to 15%). |

6. Use according to Claim 5 in gas purification processes operating under the following conditions:
- pressure: 0.1 to 10 MPa;
- temperature: 0 to 50°C;
- linear velocity: 0.01 to 0.2 m/s.

7. Use according to Claim 5, **characterized in that** the rest of the gaseous composition consists of nitrogen, hydrogen and helium.
